# EUROPEAN PATENT SPECIFICATION

(11) **EP 3 548 331 B1**
(45) Date of publication and mention of the grant of the patent: **18.11.2020**
(21) Application number: 17777489.0
(22) Date of filing: 07.09.2017
(51) Int. Cl.: B60P 1/64, B60P 3/00, B60P 3/03

(54) **TRAILER AND ARRANGEMENT FOR DELIVERY OF PRODUCTS**
ANHÄNGER UND ANORDNUNG ZUR LIEFERUNG VON PRODUKTEN
REMORQUE ET AGENCEMENT POUR LA LIVRAISON DE PRODUITS

(30) Priority: 07.09.2016 FI 20165669
(43) Date of publication of application: 09.10.2019
(73) Proprietor: Pickdelso Oy, 01300 Vantaa (FI)
(72) Inventor: MERTA, Juha, 01630 Vantaa (FI); SAVIRANTA, Tapio, 01300 Vantaa (FI)
(86) International application number: PCT/EP2017/072473
(87) International publication number: WO 2018/046603

(56) References cited:
- EP-A1- 1 155 913
- DE-U1-202005 000 282
- DE-U1-202006 003 054

## Description

Area of technology: an invention relates to picking, storing, transporting, and delivering of products; the invention especially relates to manners to reduce or eliminate manual work or process stages.

### Background of the technology

Products can be ordered from internet and later on the products are delivered, for example, to the homes of the subscribers. Products refer in this description, for example, grocery products, or some other products bought in a web shop, or laundry. The delivery service includes at least an ordering stage, a picking stage, and a delivery stage. A collector, i.e. the person who performs the picking stage, collects the products to totes. A plastic bag and a paper bag are typical totes. The totes are placed in boxes, and the collector may move the boxes by a cart during the picking stage. In the delivery stage the products are transported to the customers. Alternatively, the products can be delivered by using in an automaton equipped with lockers, after which the customers fetch their products from the lockers (this service is termed click & collect).

Various packet and parcel automatons have been developed for delivering of products. Some of the automatons are termed "grocery lockers" because they are intended for delivering grocery products to customers. Correspondingly, some automatons are made for laundry. Each locker may include tens of products packed in at least one tote. In many present delivery services a collector picks products into totes and, after the picking stage, the totes are lifted by hands into the lockers of the automaton. This task, i.e. lifting the totes can be eliminated, for example, by using one the following systems.

DE19716138 describes a system in which lockers are arranged in a cart, or a plurality of carts, and the locker doors form a wall so that the lockers are reachable through the locker doors.

US7407238 describes a system comprising a cart with shelves and a wall with doors so that the shelves of the cart are reachable through the doors.

The systems described in DE19716138 and US7407238 has such drawback that the carts are not intended for picking products into totes or containers, which causes an additional need to move the totes or containers.

The applicant's prior patent application, PCT/FI2016/050335 describes a system that reduces the needs to move the totes or containers, because a cart to be used in the automaton is also intended for picking products directly into totes.

DE102012023603 describes a mobile safe-deposit box system for delivering, for example, odorous fresh vegetables. DE202004001562 describes a mobile locker system, particularly for accommodating utility objects used on beaches, such as air mattresses, parasols, or similar. EP1155913 describes a storage system comprises a wheeled structure carrying a plurality of closable compartments, and a lock arrangement.

A drawback to be solved in the present application is related to the delivery stage of products. In more detail, when a delivery site is located far from the picking site, the products must be transported to the delivery site by a delivery vehicle, such as a van or truck. In the system described in PCT/FI2016/050335 the carts are from the trunk of the delivery vehicle to an automaton. The unloading of the carts may be difficult, if a loading bridge is missing from the proximity of the automaton. If the delivery vehicle is equipped with a tail lift, the carts can be moved by it, but use of the tail lift requires space at the delivery site and may take too much time.

Another drawback is that the prior art automatons are dependent on mains power at the delivery site. In addition, it may be difficult to estimate which delivery site the customers would prefer and which capacity (in number of totes) the automatons should have. Therefore, one drawback in the prior art automaton networks is the lack of scalability of the automaton networks.

### Summary of the invention

An objective of the invention is to solve at least some of the above-mentioned drawbacks. The invention is especially intended for a business in which products are delivered from a picking site to a number of delivery sites.

The invention concerns a trailer for a delivery of products, the trailer comprising
an attachment point for attaching the trailer to a road vehicle,
a body with wheels,
a wall attached to the body, the wall including openings to a trunk that is limited by at least the body and the wall, and
closures to cover and disclose the openings, and
the trailer is configured to open a closure in response to a correct identifier, and
the trailer is configured for the delivery so that a first repository in the trunk is reachable only through a first opening and a second repository in the trunk is reachable only through a second opening.

According to the invention, the trailer is configured to receive a cart to a storing place so that, at the storing place, the cart holds the first repository beside the first opening and the second repository beside the second opening.

In one aspect the trailer comprises a space for an accumulator.

In one aspect the closures are configured to operate on accumulator.

In one aspect the trailer comprises a cooling apparatus for cooling the trunk.

In one aspect, due to the accumulator, the cooling apparatus is independent from mains power, at least during transportation from a picking site to a delivery site.

In one aspect the trailer comprises opposite to the wall a corresponding wall including openings to repositories in the trunk.

In one aspect the trailer and the cart have such measures that the cart extends from the wall to the corresponding wall.

In one aspect the trailer comprises an attachment arrangement to hold the cart on the storing place, said attachment arrangement including a mechanical guide and a fastener, and the guide is configured to touch cart wheels to keep the cart against the wall and the fastener is configured to lock the cart to a trailer roof.

In one aspect the closure is implemented as roller door lamellas.

In one aspect a closure is movable by an activator to cover an opening.

In one aspect the trailer is configured to receive the cart in which a first repository is located on a moveable shelf to disclose a mouth of a tote and, after a picking stage, to enable moving the first repository and the tote beside a first closure.

In one aspect the trailer is configured to receive the cart in which the first repository is tilted to keep its content inside of it.

### Brief description of the drawings

For a more complete understanding of examples and embodiments of the present invention, reference is now made to the following descriptions taken in connection with the accompanying drawings.
FIGURE 1 shows an example of a trailer.
FIGURE 2 shows the trailer from a bird's perspective.
FIGURE 3 shows the trailer from the back side.
FIGURE 4A shows a cart in picking use.
FIGURE 4B shows a fastener for the cart.
FIGURE 4C shows a repository set for the cart.
FIGURE 5 illustrates a balanced loading of the trailer.
FIGURE 6 shows a second trailer example.
FIGURE 7A shows a third trailer including lockers.
FIGURE 7B shows the third trailer from a bird's perspective.
FIGURE 7C shows a cart and a trailer for parcels.
FIGURE 8 shows various trailer embodiments.
FIGURE 9 shows an automatically closable closure for a repository.
FIGURE 10 shows an arrangement for a delivery of products.

### Detailed description of the invention

It is appreciated that the following embodiments are exemplary. Although the specification may refer to "one" embodiment, the reference is not necessarily made to the same embodiment(s), or the feature in question may apply to multiple embodiments.

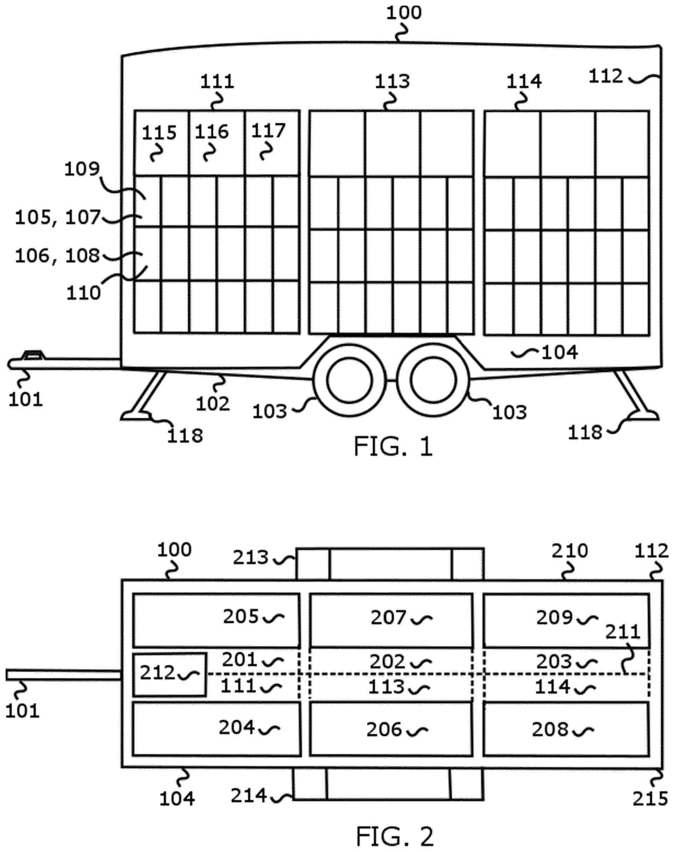

**FIGURE 1** shows an example of a trailer 100 for totes, wherein trailer 100 is viewed from its long side. Trailer 100 can be considered as a movable automaton that is intended for storing and delivering of products in totes. The products are, for example, grocery products, electronic products, clothes etc. A tote is, for example, a shopping bag, a laundry bag, or a (postal) parcel or package. Trailer 100 comprises an attachment point 101 for attaching trailer 100 to a road vehicle, such as a pick-up, an off-road vehicle, or a crossover car. Attachment point 101 is, for example, a part into which the coupling hook of the vehicle fits. Trailer 100 comprises a body 102 having at least two wheels 103. Attachment point 101 may be coupled to trailer body 102 with a beam as in the figure.

Trailer 100 comprises a wall 104 attached to body 102, and openings 105, 106 to repositories that are intended for storing totes. Openings 105, 106 are located in the wall 104 so that a first repository 107 is reachable only through a first opening 105 and a second repository 108 is reachable only through a second opening 106 when a cart containing the first repository and the second repository is received into trailer 100. When using the same cart in a delivery of the products unnecessary moving of the products can be avoided.

Body 102 can be understood as a steel frame or a chassis that is generally used in trailers. Wall 104 can be understood as a part of a coachwork that is (permanently) attached to body 102. A steel plate, an aluminium plate, or weatherproof plastic is an appropriate surface material for wall 104.

Wall 104 includes closures 109, 110 to cover and disclose openings 105, 106. A basic example of closure 109, 110 is a hinged hatch that can be termed a locker door. Closures 109, 110 are openable with a code (such as a pin number) so that when a customer inputs or provides the correct code, at least one locker door will open and the customer can take his/hers tote/totes out of trailer 100. Because repositories 107, 108 are intended for one tote, the customer's purchases may require a number of repositories.

In one embodiment the all closures 109, 110 of the repositories will open when a customer provides a correct identifier (such as a pin number). The correct identifier can be provided wirelessly, for example, by using Near Field Communication (NFC) techniques. In another embodiment the closures will open one by one so that the next closure 110 will open when a previously opened closure 109 is closed.

Each storing place inside trailer 100 can receive one cart. Trailer 100 is configured to receive the cart to storing place 111 beside wall 104 so that the first repository 107 is reachable through the first opening 105 and the second repository 108 is reachable through the second opening 106. Trailer 100 comprises a cart entry 112 for moving a cart on its wheels into trailer 100 and out of trailer 100. Cart entry 112 is not visible in the figure but it is located on a back end of trailer 100. After a picking stage the products picked in totes are moved in carts through cart entry 112 into trailer 100.

In addition to storing place 111, there are two other storing places 113, 114 for carts on same side of trailer 100. Therefore, wall 104 includes in this example altogether 63 openings, such as openings 105, 106, on its long side and as many closures, and repositories so that the openings, the closures, and the repositories are divided between three carts, each of the three carts having twenty-one repositories. Eighteen of those twenty-one repositories are especially intended for shopping bags, but the three repositories locating the uppermost in the cart may include products in a package. A toilet paper package is an example of said products. Closures 115-117 cover accesses to the three uppermost repositories.

After the picking state trailer 100 includes at least one cart and it will be transported to a delivery site and parked there. In more detail, trailer 100 is detached from the road vehicle and left, for example, on a parking lot for a predetermined period of time that is termed a "delivery time window". One benefit of trailer 100 is it operates as an unmanned delivery point. When the delivery time window is ended, and the all totes are expected to be fetched (by customers), trailer 100 (and the carts inside it) will be transported back to the same picking site, or some other picking site.

In this example closures 109, 110, 115-117 and the rest of the closures are in their closed position, trailer 100 is parked, and customers can fetch their totes from trailer 100. Trailer 100 is configured to open by using a computer unit and an electric lock a closure, such as closure 109, in response to providing a correct (visual or electrical) identifier.

Trailer 100 has altogether four legs 118 on which trailer rests when parked. Legs 118 are intended to be used at the picking site and at each delivery site. The legs are lifted up during trailer transportation. By using legs 118, the trailer floor can be set on a horizontal plane even if the parking plot is bumpy or tilted to some direction.

**FIGURE 2** shows a cross-section of trailer 100, wherein trailer 100 is viewed from a bird's perspective. Trailer 100 includes altogether six storing places 111, 113, 114, 201-203 for the carts, three storing places on each long side of trailer 100. The all storing places 111, 113, 114, 201-203 are in use, because six carts 204-209 are received in said storing places. For example, cart 204 is received in storing place 111.

Storing place 111 must have some attachment arrangement to attach cart 204 so that the transportation does not cause any damage in the trunk of trailer 100. The attachment arrangement may comprises attachment points on the trunk and cargo straps by which cart 204 is tied to the attachment points to hold cart 204 on its storing place.

Alternatively, the attachment arrangement may comprise a steel pipe that can be locked to wall 104 and a corresponding wall 210 on the other long side of trailer 100 so that cart 204 can neither move in the trunk towards the front end of trailer 100 nor towards the back end of trailer 100. Said steel pipe may include a hook type of part for holding cart 204 and preventing cart 204 to tilt towards cart 205.

As wall 104, also wall 210 has altogether 63 closures to cover and disclose as many openings to the repositories, wherein the repositories are located in carts 205, 207, 209 so that each of the carts includes twenty-one repositories. Open space 211 in the trunk continues from the back end of trailer 100 to its front end and is useful for circulating air inside trailer 100. A cooling apparatus 212 at the front end cools the air and circulates it to maintain a refrigerator temperature in the trunk. If the climate is cold, also a heating apparatus is needed to maintain an appropriate temperature in the trunk.

The following cart and trailer measurements are examples. Cart 204 is 55 cm width on the level of the cart wheels to keep cart 204 in balance when moving it. Cart 204 is 35 cm width over the cart wheels, wherein the width of 35 cm is the same as the width of a tote. Open space 211 between carts is 40 cm width. Each wall 104, 210 is 5 cm thick because of a thermal insulation layer. Therefore, the width of the trunk from the outer surface of wall 104 to outer surface of wall 210 is 120 cm. Because wheels 103 extend outside of the trailer body, the width of trailer 100 from a mudguard 213 to another mudguard 214 on the opposite side of trailer 100 is about 160 cm. Each cart is 120 cm long and the carts are situated at two queues so that carts 204, 206, and 208 form one queue and carts 205, 207, and 209 form another queue.

Each cart queue includes three carts and is thus 360 cm long. The back end of trailer 100 is closed with a 110 cm width pair of doors 215. Pair of doors 215, as well as the front end of trailer, is 5cm thick because of the thermal insulation layer. The beam of trailer 100 is 80 cm long. Therefore, the length of trailer 100 from the top of the beam to pair of doors 215 is about 450 cm, and trailer 100 can be parked to a parking lot that is 5 m long and 2.5 m width.

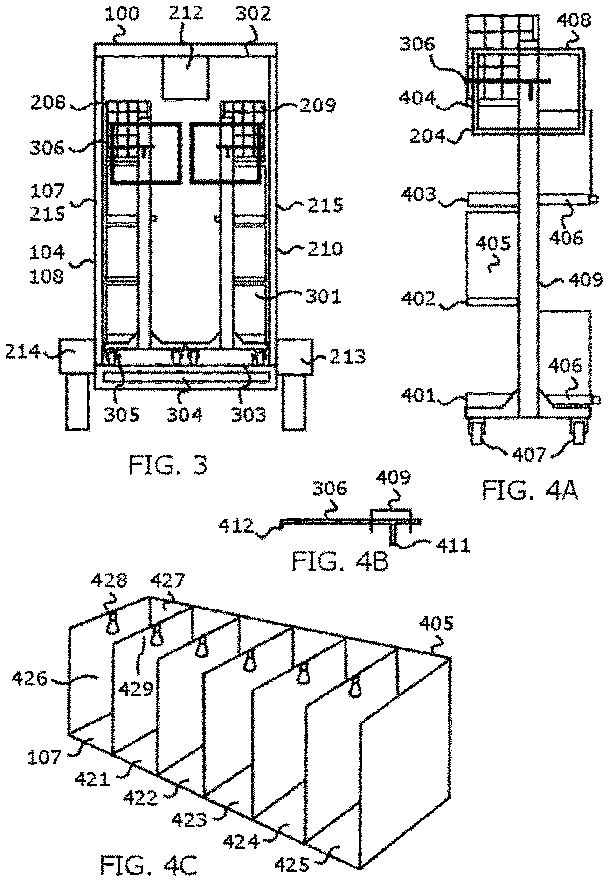

**FIGURE 3** shows trailer 100 from the back side. Pair of doors 215 is in the open position and thus carts 208, 209, which are placed into the trunk of trailer 100, are visible. Trailer 100 comprises repositories on its both walls 104, 210. For example, repository 301 is reachable through wall 210 when cart 209 is received into trailer 100. Loading of trailer 100 can be performed at the picking site by using a loading platform and a light loading bridge between trailer 100 and the loading platform. The loading bridge may be a hinged aluminium plate that is light enough to be used by hands.

The following cart and trailer measurements are examples. The height of carts 208, 209 is 170 cm. The height of the trunk is 200 cm and cooling apparatus 212 is located between two carts at the front end of trailer 100. Therefore, the trunk is so large that a delivery vehicle driver can enter into it when loading or unloading trailer 100. The ceiling 302 and the floor 303 of trailer 100 include the thermal insulation layer. Floor 303 further includes a space for an accumulator 304. Cooling apparatus 212 can function with accumulator 304 and therefore trailer 100 is independent from mains power, at least during the transportation from a picking site to a delivery site.

In one embodiment trailer 100 is independent from mains power also at the delivery site by utilizing accumulator 304. Closures 109, 110 of repositories are configured to operate on accumulator 304. When trailer 100 is transported from the delivery site back to the picking site it is connected to mains power, after which cooling apparatus 212 functions with the mains power and accumulator 304 is recharged.

In one embodiment trailer 100 comprises the following attachment arrangement to hold cart 208 on its storing place 114. The attachment arrangement includes a mechanical guide 305 and a fastener 306, and guide 305 is configured to touch cart wheels to keep cart 208 against wall 104 and fastener 306 is configured to lock cart 208 to ceiling 302 so that cart 208 stays on its storing place 114. Guide 305 is a steel plate attached to floor 303.

In one embodiment fastener 306 is a barrel bolt by which cart 208 can be attached to wall 104. Wall 104 includes a hole for the barrel bolt. When pushed into the hole and then turned 90 degrees the barrel bolt locks cart 208 to wall 104 and prevents cart 208 from falling towards cart 209 during transportation of trailer 100. Guide 305 continues from cart entry 112 to the front end of trailer 100 and wall 104 includes holes for barrel bolts so that carts 204, 206 can be held on theirs storing places 111 and 113. Carts 205, 207, 209 on the opposite side of the trunk can be held on theirs storing places 201-203 by using a corresponding guide and barrel bolts.

**FIGURE 4A** shows cart 209 in picking use, wherein cart 209 is viewed from its short side. Cart 209 also represents the other corresponding carts, i.e. carts 204-208. Any of carts 204-209 can be placed to any of storing places 111, 113, 114, 201-203.

Cart 209 comprises four shelves 401-404 of which the lowest shelf 401 and the third shelf 403, counting from below, are movable shelves and the other two shelves 402, 404 are fixed shelves. The first repository 107 is located on movable shelf 403. The uppermost shelf, i.e. shelf 404, includes steel mesh on three sides so that the both short sides have the steel mesh and also the long side locating farer from wall 104. Dividing walls divide shelf 404 into three repositories which are located beside closures 115-117. The dividing walls are made of steel mesh or transparent plastic plates, for example. Each of shelves 401-403 includes a repository set for six totes. Each repository in a repository set 405 is configured to support a tote. Thus, during the picking stage, the mouth of the tote is continuously at least partly disclosed to receive the products into the tote.

Each movable shelf 401, 403 comprises a displacer 406 which is, for example, a pair of a drawer slides or a pair of slide rails. A telescopic drawer may include three nested slides. Cart 209 is configured for picking so that displacers 406 have an open position and they remain in the open position when cart 209 is moved during the picking. When in an open position displacer 406 and moveable shelf 403 reveal repository set 405 of fixed shelf 402 so that products can be picked in the repositories of repository set 405.

At least two of the cart wheels 407 can turn in order to make cart 209 guidable. Cart 209 includes fixed handles 408 for pushing and guiding the cart. A durable material, such as steel, is an appropriate material for the body of cart 209. The cart body includes U profile 409 and a corresponding U profile at the opposite end of cart 209.

It should be noticed that in Figure 3 the all carts, including cart 209, are narrowed. In other words, cart 209 is changed from the picking use to the delivery use so that moveable shelves 401, 403 are pushed to their opposite position in which they are located beside wall 104.

**FIGURE 4B** shows fastener 306 for cart 209, wherein fastener 306 is viewed from a bird's perspective. Fastener 306 is about 40 cm long barrel bolt that penetrates U profile 409 in two points. In more detail, U profile 409 includes two holes so that fastener 306 can be moved along a line defined by said two holes. Fastener 306 includes a handle 411 for moving the fastener along the line and a protrusion 412 for locking cart 209 to a wall of trailer 100. Handle 411 is in a horizontal orientation because in this orientation protrusion 412 can be pushed inside the wall. Then handle 411 can be turned to a vertical orientation to lock cart 204 (in Figure 3 protrusion 412 is located inside wall 104 and cart 209 is locked and ready for the transportation).

**FIGURE 4C** shows repository set 405 intended for carts 204-209. Repository set 405 includes a repository 107 and five other similar repositories 421-425.

Said repository 107 includes a side opening 426 and an upper opening 427. Upper opening 427 opens upwards relative to the bottom of repository 107. Side opening 426 means that one short side is missing from repository 107. A tote (and the products placed in the tote) can be taken through side opening 426 out of repository 107.

Repository 107 comprises holders 428, 429 for holding at least one handle of the tote so that holder 428 is located on the upper edge of a long side of repository 107 and holder 429 is located on the upper edge of the opposite long side (holder 429 is not visible in the figure). For example, carabiners can be used as holders 428, 429. In more detail, a holder 428, 429 includes a carabiner and a band attached to the carabiner, and a staple for attaching the band into a hole of repository 107. Before the picking stage a tote, which has handles on its short sides, is placed into repository 107 and one of the handles is attached with holders 428, 429 to repository 107. Holders 428, 429 support the tote and keep its mouth at least partly open for picking of products so that a collector can put the products into the tote through upper opening 427. If the tote has handles on its long sides, holder 428 is attached to one handle and holder 429 is attached to the other handle.

In one embodiment a system unit for picking and storing of products is one tote. The small unit size increases the statistical storage capacity approximately 100% compared to the known systems in which the system unit is larger, for example, 70 1.

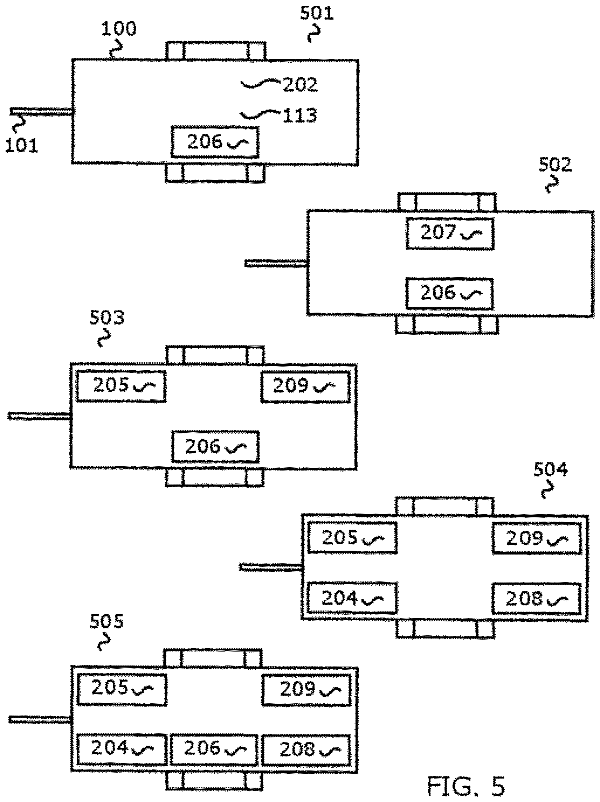

**FIGURE 5** illustrates a balanced loading of trailer 100 from a bird's perspective. Correspondingly, other trailers mentioned later in this description can be balanced. Trailer 100 can receive from one to six carts so that a weight at attachment point 101 stays for safety reasons within a predetermined range.

In the first view 501 a single cart 206, is placed at the middle of trailer body 102 where the cart can be placed either on storing place 113 or 202.

In the second view 502 two carts 206, 207 are placed at the middle of trailer body (alternatively they could be placed on the opposite ends of trailer body 102).

In the third view 503 two carts 204, 205 are placed on the opposite ends of trailer body 102 and one cart 206 is placed at the middle of trailer body 102.

In the fourth view 504 two carts 204, 205 are placed on one end of trailer body 102 and two carts 206, 207 are placed on the opposite end of trailer body 102.

In the fifth view 505 the placing of carts is the same as in the fourth view 504, except that the fifth cart, i.e. cart 208, is placed at the middle of trailer body 102.

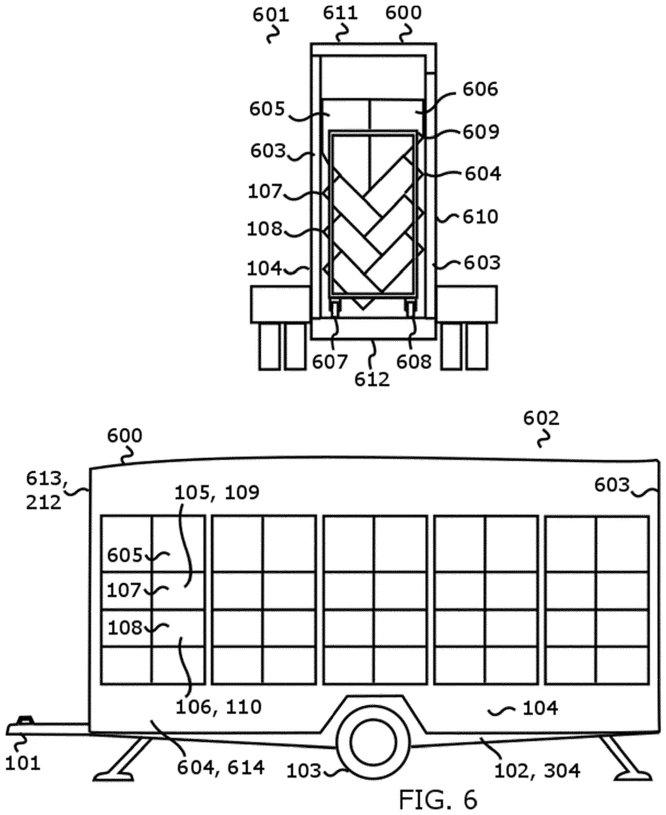

**FIGURE 6** includes an example of trailer 600 that is used with picking carts.

The first view 601 shows trailer 600 from the back. Pair of doors 603 is in the open position and thus a cart 604 is visible in the trunk of trailer 600. The first repository 107 is tilted to keep its content inside of it. Cart 604 includes repositories which are tilted to at 45 degrees angle in relation to the horizontal plane. The repositories are made of perforated steel plate, for example. When washing them, the wash water drips through the perforation out of the repositories. The uppermost repositories 605, 606 are intended for light products and they are larger than the repositories locating under them. The most repositories, such as repositories 107, 108, are intended for shopping bags. Cart 604 has wheels 607, 608 and a handle pipe 609 for moving and guiding cart 604. Cart 604 extends from wall 104 to a corresponding wall 610.

The both walls 104, 610 include openings for the repositories. The trunk of trailer 600 has a space for a cooling apparatus in the proximity of the ceiling 611. The floor 612 of the trunk is thick enough to enclose an accumulator inside it.

The following cart and trailer measurements are examples. The height of cart 604 is 150 cm, the width is 60 cm, and the length is 80 cm. The height of the trunk is 160 cm, the width is 61 cm, and the length is 401 cm. The all five carts are kept in the trunk during transportation, because the carts fill the trunk so that they cannot move horizontally when pair of doors 603 is closed. A benefit of this embodiment is that no separated attachment arrangement is needed. Because the trunk is low (160 cm) and narrow (61 cm), a person loading cart 604 can utilize about 350 cm long rod with a hook at one of its end so that the person grips handle pipe 609 with the hook and uses the rod to push cart 604 into trailer 600. The rod with the hook can be utilized also when unloading trailer 600.

The second view 602 shows trailer 600 from its long side. Cart 604 is pushed against a front wall 613 and against wall 104 and therefore cart 604 is located in a storing place 614. For example, repository 107 in the trunk is reachable through opening 105 after providing a correct code or another identifier, such as a linear barcode or as a matrix barcode. The correct identifier opens closure 109 and grants an access to repository 107. The lower edge of the uppermost repository 605 is located (in this example) at the height of 160 cm from the ground.

As cart 204, also cart 604 may be parked for a time at a picking site. A benefit related to the parking is that cart 204, 604 can be used as storage for totes. In more detail, when products are picked into the totes, and the picking stage ends, cart 204, 604 is moved into trailer 100, 600. When a driver arrives to the picking site, he/she just attaches trailer 100, 600 to the road vehicle and transports it to a delivery site. In other words, there is no need to move the carts and the products after the picking stage into a chilled room and later on from the chilled room into a delivery vehicle.

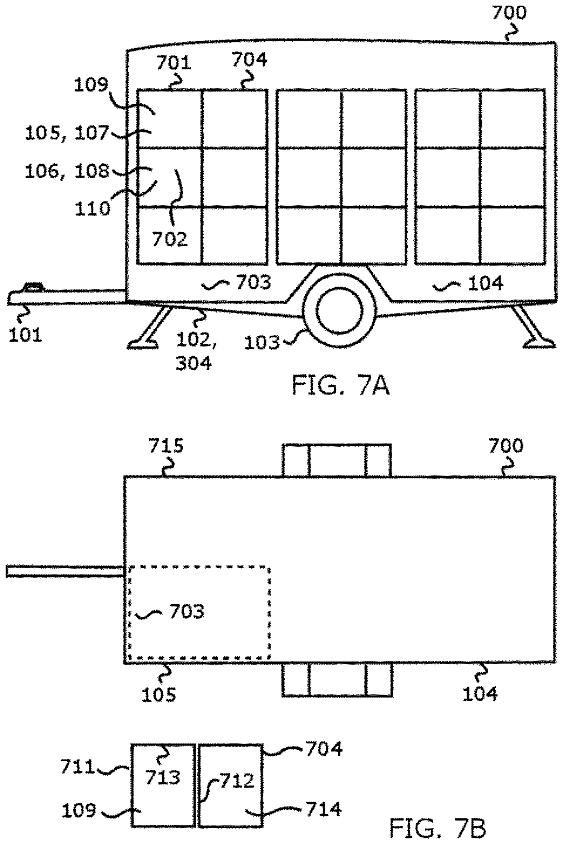

**FIGURE 7A** shows an example in which a trailer 700 is viewed from its long side. Trailer 700 comprises lockers, such as lockers 701, 702. A locker 701 comprises the first repository 107 and the first closure 109. A locker 702 comprises the second repository 108 and the second closure 110.

Trailer 700 comprises wall 104 with openings 105, 106 to repositories 107, 108 and, as in the previous embodiments, trailer 700 comprises storing places for carts. A cart 704 is received into trailer 700, into a storing place 703. Cart 704 includes repositories 107, 108 and four other repositories for products to be delivered.

In one embodiment lockers 701, 702 are thermally isolated from each other and an ambient with theirs closures 109, 110. For example, if closure 109 is left open, intentionally or unintentionally, the temperature in locker 701 cannot be controlled anymore but the temperature in the rest of the lockers in trailer 700 can still be controlled.

In one embodiment locker 701, i.e. repository 107, can receive a box having measures 60 × 40 × 30 cm and handles for lifting it. The box includes one or more products to be delivered to a customer.

In one embodiment each repository, such as repository 107 can receive at least one product without any box. Cart 704 is a picking cart such that products to be delivered are picked into its repositories, for example, in a store.

In one embodiment trailer 700 and its lockers are intended for laundry bags. When a customer has collected, for example, from locker 701 in a laundry bag including washed and dried clothes, the customer may place another laundry bag including dirty clothes in locker 701 to be delivered to a launderette.

In one embodiment trailer 700 and its lockers are intended for parcels. A parcel in locker 701 includes at least one product. The sender of the parcel may be a manufacturer of said at least one product, or the sender is, for example, a web shop. In this embodiment the parcel is delivered by a post or a courier company.

**FIGURE 7B** shows trailer 700 and cart 704 from a bird's perspective. First repository 107 in cart 704 comprises a bottom, a ceiling, two side walls 711, 712, an opening, and a back wall 713 opposite to the opening, and corresponsive repository 714 locates beside repository 107. Cart 704 is appropriate for boxes or laundry bags. Storing place 703 for a cart in trailer 700 is marked with dashed line. Trailer 700 comprises opposite to wall 104 a corresponding wall 715 including openings to repositories. Trailer 700 can receive altogether six carts, each having six repositories. Each repository can receive, for example, one box whose mouth is 60 × 40 cm and height 35 cm.

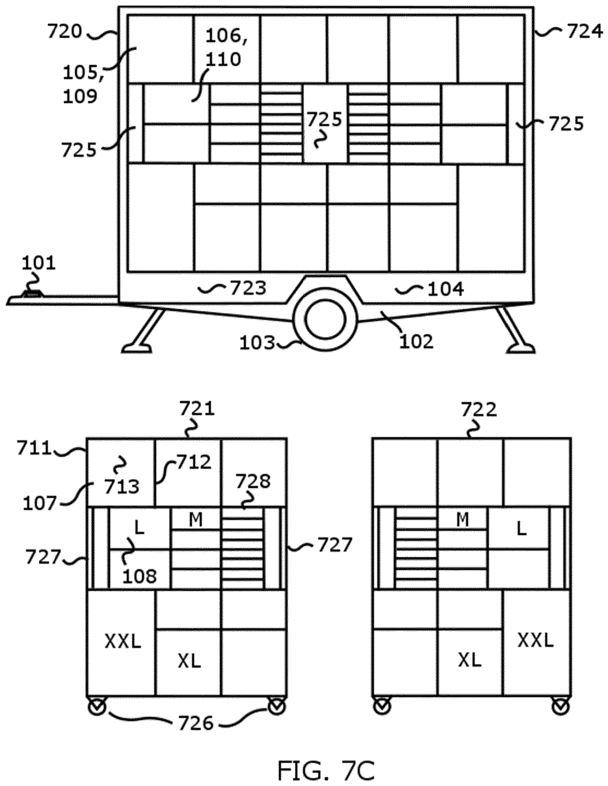

**FIGURE 7C** shows a trailer 720 and two carts 721, 722 for delivering parcels, wherein trailer 721 and carts 721, 722 are viewed from theirs long side. Trailer 721 comprises a storing place 723 beside wall 104 for cart 721 and another storing place for cart 722 and, opposite to wall 104, two storing places beside a corresponding wall 724 for two other carts. Wall 104 surrounds the long side of trailer 721 and wall 104 further includes rectangular form of plates 725. The other rectangles in Figure 7C illustrate locker doors, including closures 109, 110. Cart 721 comprises wheels 726 for moving it and four handles 727 for handling cart 721. First repository 107 in cart 721 comprises a bottom, a ceiling, two side walls 711, 712, an opening, and a back wall 713 opposite to the opening. The repositories are of various sizes so that a repository 728 represents the smallest repository 'S' in cart 721. The other repository sizes from smallest to largest are marked 'M', 'L', 'XL', and 'XLL'. The other cart in Figure 7C, i.e. cart 722, comprises repositories whose positioning is a mirror image of the repositories of cart 721.

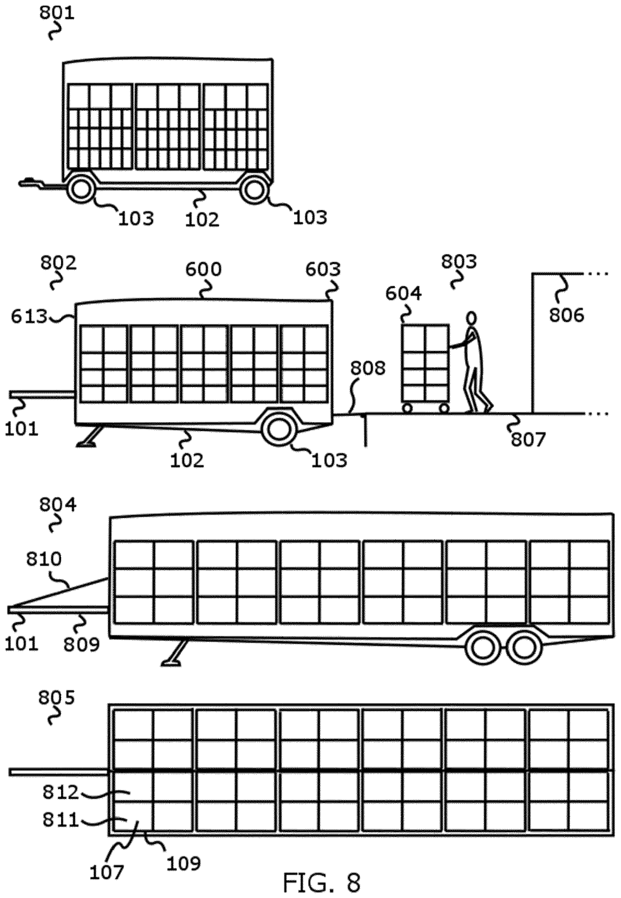

**FIGURE 8** shows various embodiments for trailers. In the previous examples the trailer wheels are placed in the middle of the body and carts are used for moving totes into the trailers. There are, however, other options.

In the first view 801 trailer wheels 103 are placed in the corners of trailer body 102. Thus, a trailer can be implemented without legs 118.

In the second view 802 trailer wheels 103 are placed on the other end of body 102, in the proximity of pair of trunk doors 603. Attachment point 101 is a type of attachment point used in semi-trailers. A benefit of this embodiment is that a road vehicle can be attached fast to trailer 600 and detached fast from it. The driver does not need to leave the road vehicle for the attachment and detachment of trailer 600.

The third view 803 shows using of trailer 600 as a temporary storage. When a picker (an employee) has picked in a building 806 products into cart 604, the picker pushes cart 604 via a loading platform 807 and via a hinged loading bridge 808 into trailer 600. After that the same picker or another picker may push another cart(s) into 600. Trailer 600 operates as the temporary storage for at most five carts and during that time its accumulator is recharged. When a driver arrives with a road vehicle to the picking site, the driver disconnects trailer 600 from mains power, attaches trailer 600 to the road vehicle, and transports it to a delivery site.

The fourth view 804 shows a trailer whose length is almost ten meters. Attachment point 101 is a type of attachment point used in semi-trailers and it is connected to a beam 809. Beam 809 and its support 810 are attached to the front wall of the trailer so that attachment point 101 is located at least 80 cm from the ground. Then a road vehicle can be reversed under attachment point 101 for moving the trailer.

The fifth view 805 shows the same trailer as view 804 but here from a bird's perspective without a roof. Each repository can receive two boxes of size 60 × 40 × 35 cm so that the long sides of the boxes touch each other. For example, boxes 811, 812 are located in a repository 107 and they are reachable by opening closure 109. The long sides of the boxes are parallel with the long side of the trailer. Carts are located in two lines inside the trailer, in six carts per a line. The maximum number of boxes is 144.

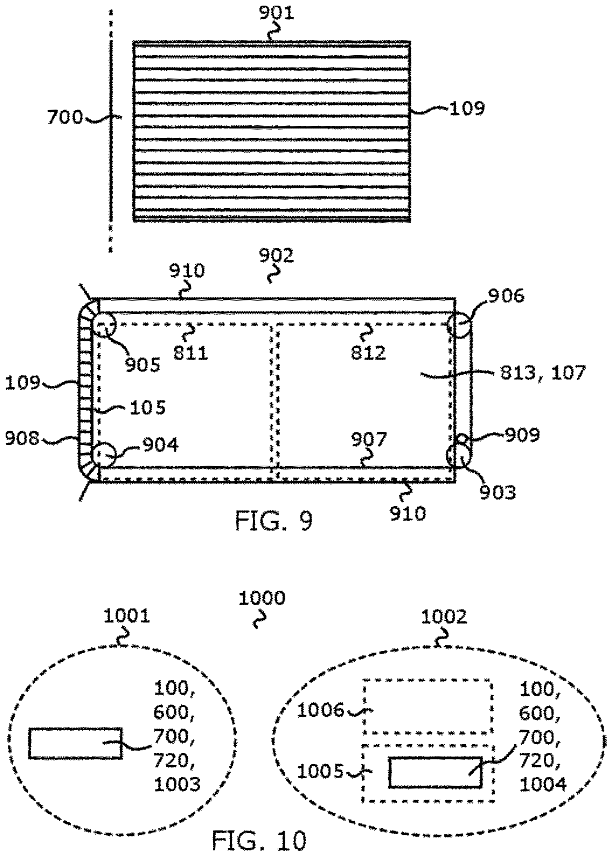

**FIGURE 9** shows an automatically closable closure 109. In the prior art automatons a closure is usually a hinged hatch that opens to the right or to the left. Those hatches have certain drawbacks. A first drawback is that a customer hurt himself/herself to the hatch when the hatch is opened. A second drawback is that the prior art hatch cannot be closed by the automaton/trailer, if the customer forgets to close the hatch. This drawback especially trailers intended for temperature controlled products. The above mentioned drawbacks can be solved by using a small-sized automated roller door as closure 109. A roller door is used in the prior art, for example, as a door of a car garage.

View 901 shows closure 109 in view 805 implemented as a roller door. Closure 109 is in a closed position and it covers opening 105 into repository 107 (opening 105 and repository 107 are not visible because they are located behind closure 109).

View 902 shows a cross-section of closure 109 from the side. The short sides of boxes 811, 812 are marked with dash lines. Closure 109 comprises four trapezoidal wheels 903-906, a trapezoidal belt 907 surrounding trapezoidal wheels 903-906, roller door lamellas 908 attached to trapezoidal belt 907, an activator 909 coupled to wheel 903, and at least one sensor for providing sensor data about a current position of closure 109. Activator 909 is operated on the basis of this sensor data. In addition to wheels 903-906, four corresponding wheels, and a trapezoidal belt surrounding the four corresponding wheels are located on the opposite side of repository 107. Door lamellas 908 are also attached to said trapezoidal belt. Trapezoidal wheels 903-906 and the four corresponding wheels are attached with axels to the inner surface 910 of repository 107. Activator is in view 902 an electric motor which can rotate wheel 903 to open closure 109 so that roller door lamellas 908 move via wheel 905 towards wheel 906. An electric motor, pneumatic apparatus, or another type of activator 909 with various, generally known hatch, folding door, sliding door, or roller door implementations can be utilised when designing and implementing an automatically closable closure 109 for trailer 100, 600, or 700.

**FIGURE 10** shows an arrangement 1000 for picking, storing, transporting, and delivering of products. Arrangement 1000 concerns at least two sites, a picking site 1001, where products are picked, and a delivery site 1002, where the products are delivered to customers. There are usually a number of delivery sites, but arrangement 1000 comprises in this example only one delivery site and two trailers 1003, 1004 which can be transported with a road vehicle between picking site 1001 and delivery site 1002. Trailers 1003, 1004 are of the same model as trailers 100, trailers 600, trailers 700, or trailers 721. The process stages and other features described in connection with trailers 100, 600, 700, 721, and carts 204, 604, 704, 721, also concern arrangement 1000.

Picking site 1001 is, for example, a store, a dark store, a laundrette, or a logistic centre. The logistic centre is owned by, for example, a national post or a courier company. Different click & collect services have different requirements. Those requirements can be fulfilled by using an appropriate trailer and its carts. In the following are given examples of use of carts 204, 604, 704, 721 at different types of picking sites 1001.

In the store, or in the dark store, cart 204, 604 is pushed along aisles and used as a picking cart. The products to be picked are, for example, grocery products. If the products include frozen food or some temperature controlled products, a certain temperature, i.e. refrigerator temperature (2 - 6 ° C), must be maintained. In one embodiment the certain temperature is maintained by using air-conditioning and a thermally insulated trunk in trailer 100 or 600. Alternatively, temperature controlled product(s) can be placed with a cooler, such as gel ice, into a thermally isolated container. Then the cooler and the container maintain the temperature. There are known solutions for maintaining a predetermined temperature. Nevertheless, in many click & collect services the freezer temperature (or some other predetermined temperature) is not needed.

In the laundrette, cart 704 and similar carts can be utilized so that washed and dried clothes are placed into correct carts, in more details, into correct repositories in those carts. Then each of the carts is pushed into a correct trailer so that each laundrette customer will get his/hers clothes back from the trailer, for example, at delivery site 1002.

In the logistic centre, cart 721 and similar carts can be used as sorting shelves in the end of a sorting line. Parcels intended to be delivered at delivery site 1002 are guided to said sorting line. Then the parcels are picked from said sorting line and placed into correct repositories of cart 721 and the similar carts. Cart 721 is pushed into a trailer that will be transported to delivery site 1002. The trailer is parked thereat after which each customer gets his/hers parcel from the trailer.

To summarize: the products to be delivered are already placed at picking site 1001 into correct repositories and thus this task does not need to be performed at delivery site 1002. The filing of the repositories can be performed faster and more reliable at a picking site compared to a known solution in which the filling is performed at a delivery site so that a driver of a delivery vehicle fills manually lockers of a packet automaton.

In Figure 10 trailer 1003 is parked on a parking lot 1005 at delivery site 1002 and the other trailer, trailer 1004, is parked at picking site 1001. In one embodiment trailer 1003, 1004 is connectable to mains power and it operates as a movable (cool) storage. In another embodiment trailer 1003, 1004 operates on accumulator, at least at delivery site 1002. Delivery site 1002 is located on a residential area, or generally on such area, where customers willingly collect their products.

When the delivery time window of trailer 1003 is closed, it is time to change trailer 1003 to trailer 1004. In one embodiment the changing of trailer 1003 includes the following acts. A road vehicle driver, who has transported trailer 1004 to delivery site 1002, parks trailer 1004 on a parking lot 1006. Parking lot 1006 locates preferably beside parking lot 1005. The driver detaches trailer 1004 after which customers can collect their products from trailer 1004. Thus, there is no need to lift totes into lockers of a packet automaton (as in the prior art) but the driver just replaces the empty trailer (here trailer 1003) with trailer 1004 filled with products. Then the driver drives partly on parking lot 1005 and attaches (empty) trailer 1003 to the road vehicle.

A length of a delivery time window may be an hour or couples of hours, but the length may be 24 hours or longer. In one embodiment the length of the delivery time window is one week so that customers have several possible points of time for collecting theirs products. A delivery site comprises seven parking plots and seven carts on the parking plots such that there is one cart per each week day. On Mondays a "Monday cart" is replaced with a "new Monday cart", on Tuesdays a "Tuesday cart" is replaced with a "new Tuesday cart", etc. This embodiment may be useful when delivering parcels and thus an appropriate trailer model is trailer 720.

A benefit of arrangement 1000 is that it is scalable. When adding a trailer or trailers into arrangement 1000 the storage capacity is increased and also a delivery capacity is increased. The increment of the delivery capacity can be utilized at delivery site 1002 so that two (or more) trailers are parked there within the same delivery time window. Alternatively, the increment of the delivery capacity can be utilized by adding a new delivery site to arrangement 1000 and using the new trailer/trailers at the new delivery site.

Another benefit of arrangement 1000 is that it reduces or eliminates manual work, such as moving products into a temporary storage before moving them into a trunk, or lifting totes into lockers of a packet automaton.

Another benefit of arrangement 1000 is that the picking and delivery process is more reliable and inexpensive when there is less manual work.

Another benefit of arrangement 1000 is that there is less traffic jams at a picking site. For example, there are less traffic jams at building 806 because trailer 600 and other trailers are ready for transportation when drivers arrive there.

While the present invention has been described in connection with a number of exemplary embodiments, measurements, and implementations, the present invention is not so limited, but rather covers various modifications, and equivalent arrangements, which fall within the purview of prospective claims.

## Claims

1. A trailer (100, 600, 700, 720) for a delivery of products, the trailer comprising
an attachment point (101) for attaching the trailer to a road vehicle,
a body (102) with wheels (103),
a wall (104) attached to the body, the wall including openings (105, 106) to a trunk that is limited by at least the body and the wall, and
closures (109, 110) to cover and disclose the openings, and
the trailer is configured to open a closure (109, 110) in response to a correct identifier, and
the trailer is configured for the delivery so that a first repository (107) in the trunk is reachable only through a first opening (105) and a second repository (108) in the trunk is reachable only through a second opening (106),
**characterized in that**
the trailer (100, 600, 700, 720) is configured to receive a cart (204, 604, 704, 721) to a storing place (111, 614, 703, 723) so that, at the storing place, the cart holds the first repository beside the first opening and the second repository beside the second opening.

2. The trailer as claimed in claim 1, **characterized in that** the trailer comprises a space for an accumulator (304).

3. The trailer as claimed in claim 2, **characterized in that** the closures (109, 110) are configured to operate on accumulator.

4. The trailer as claimed in claim 1, **characterized in that** the trailer comprises a cooling apparatus (212) for cooling the trunk.

5. The trailer as claimed in claims 2 and 4, **characterized in that** due to the accumulator (304) the cooling apparatus (212) is independent from mains power, at least during transportation from a picking site to a delivery site.

6. The trailer as claimed in claim 1, **characterized in that** the trailer comprises opposite to the wall a corresponding wall (210, 610, 715, 724) including openings to repositories in the trunk.

7. The trailer as claimed in claim 6, **characterized in that** the trailer (600) and the cart (604) have such measures that the cart (604) extends from the wall to the corresponding wall (610).

8. The trailer as claimed in claim 1, **characterized in that** the trailer comprises an attachment arrangement to hold the cart on the storing place, said attachment arrangement including a mechanical guide (305) and a fastener (306), and the guide is configured to touch cart wheels to keep the cart against the wall and the fastener is configured to lock the cart to a trailer ceiling (302).

9. The trailer as claimed in claim 1, **characterized in that** in the trailer the closure (109, 110) is implemented as roller door lamellas (908).

10. The trailer as claimed in claim 1, **characterized in that** in the trailer the closure (109, 110) is movable by an activator (909) to cover an opening (105, 106).

11. The trailer as claimed in claim 1, **characterized in that** the trailer is configured to receive the cart (204) in which a first repository (107) is located on a moveable shelf (403) to disclose a mouth of a tote and, after a picking stage, to enable moving the first repository and the tote besides a first closure (109).

12. The trailer as claimed in claim 1, **characterized in that** the trailer is configured to receive the cart (604) in which the repository (107, 108) is tilted to keep its content inside of it.

## Patentansprüche

1. Ein Anhänger (100, 600, 700, 720) für die Lieferung eines Produkts. Der Anhänger besteht
aus einem Befestigungspunkt (101) zur Befestigung des Anhängers an einen Straßenfahrzeug,
einer Karosserie mit Rädern (103),
einer mit der Karosserie verbundenen Wand (104), die mit Öffnungen (105, 106) zum Laderaum versehen ist. Der Laderaum wird mindestens von der Karosserie, der Wand und den
Abdeckungen (109, 110) zum Abdecken der Öffnungen begrenzt, und
der Anhänger ist darauf ausgelegt, eine Abdeckung (109, 110) als Reaktion auf einen korrekten Identifikator zu öffnen, und
der Anhänger ist so für die Lieferung konfiguriert, dass ein erster Stauraum im Laderaum nur mittels einer ersten Öffnung (105) und ein zweiter Stauraum (108) im Laderaum nur durch eine zweite Öffnung (106) erreicht werden kann,
**dadurch gekennzeichnet, dass**
der Anhänger (100, 600, 700, 720) konfiguriert ist, einen Karren (204, 604, 704, 721) in einem Aufbewahrungsort (111, 614, 703, 723) so aufzunehmen, dass der Karren den ersten Stauraum neben der ersten Öffnung und den zweiten Stauraum neben der zweiten Öffnung aufnimmt.

2. Der Anhänger, wie in Anspruch 1 beansprucht, ist dadurch **gekennzeichn et**, dass der Anhänger einen Raum für einen Akku (304) umfasst.

3. Der Anhänger, wie in Anspruch 2 beansprucht, ist dadurch **gekennzeichn et,** dass die Abdeckungen (109, 110) konfiguriert sind, durch den Akku betrieben zu werden.

4. Der Anhänger, wie in Anspruch 1 beansprucht, ist dadurch **gekennzeichn et**, dass der Anhänger einen Kühlapparat (212) zur Kühlung des Laderaums umfasst.

5. Der Anhänger, wie in Anspruch 2 und 4 beansprucht, ist dadurch **gekennze ichnet**, dass aufgrund des Akkus (304) der Kühlapparat (212) von der Netzversorgung für mindestens dem Transport von einem Ladeort zu einem Auslieferungsort unabhängig ist.

6. Der Anhänger, wie in Anspruch 1 beansprucht, ist dadurch **gekennzeichn et**, dass er eine der ersten Wand gegenüberliegenden Wand (210, 610, 715, 724), einschließlich Öffnungen zu den Stauräumen im Laderaum, umfasst.

7. Der Anhänger, wie in Anspruch 6 beansprucht, ist dadurch **gekennzeichn et**, dass der Anhänger (600) und der Karren Abmessungen, die von der ersten Wand zur gegenüberliegenden Wand (610) reichen, umfasst.

8. Der Anhänger, wie in Anspruch 6 beansprucht, ist dadurch **gekennzeichn et**, dass der Anhänger eine Befestigungsvorrichtung zur Befestigung das Karrens im Aufbewahrungsort umfasst und diese Befestigungsvorrichtung eine mechanische Führung (306) und ein Befestigungselement (306) einschließt und die Führung konfiguriert ist, die Räder des Karrens zu berühren, um den Karren an der Wand zu halten und das Befestigungselement konfiguriert ist, den Karren an der Decke des Anhängers (302) zu befestigen.

9. Der Anhänger, wie in Anspruch 1 beansprucht, ist dadurch **gekennzeichn et**, dass die Abdeckungen (109, 110) als Rolltor-Lamellen ausgeführt sind (908).

10. Der Anhänger, wie in Anspruch 1 beansprucht, ist dadurch **gekennzeich net**, dass die Abdeckungen (109, 110) durch einen Aktivator (909) beweglich sind, um eine Öffnung (105, 106) abzudecken.

11. Der Anhänger, wie in Anspruch 1 beansprucht, ist dadurch **gekennzeich net**, dass der Anhänger konfiguriert ist, einen Karren (204), in dem sich der erste Stauraum (107) befindet, auf einem beweglichen Regal (403) aufzunehmen, um die Öffnung eines Fachs freizugeben und um nach Entnahme die Bewegung des ersten Stauraums und das Fach neben eine erste Abdeckung (109) zu ermöglichen.

12. Der Anhänger, wie in Anspruch 1 beansprucht, ist dadurch **gekennzeich net**, dass er für die Aufnahme eines Karrens (604), in dem der Stauraum (107, 108) zur sicheren Aufbewahrung des Inhalts geneigt ist, konfiguriert ist.

## Revendications

1. Une remorque (100, 600, 700, 720) pour une livraison de produits, la remorque comprend
un point d'attelage (101) pour l'attelage d'une remorque à un véhicule routier,
une carrosserie (102) avec des roues (103),
une paroi (104) fixée à la carrosserie, la paroi comprenant des ouvertures (105, 106) à un coffre qui est limité par au moins la carrosserie et la paroi, et
des fermetures (109, 110) pour couvrir et exposer les ouvertures, et
la remorque est configurée pour ouvrir une fermeture (109, 110) en réponse à un identifiant correct, et
la remorque est configurée pour la livraison de manière à ce qu'un premier dépôt (107) dans le coffre ne soit accessible que par une première ouverture (105) et un second dépôt (108) dans le coffre ne soit accessible que par une seconde ouverture (106),
**caractérisé en ce que**
la remorque (100, 600, 700, 720) est configurée pour recevoir un chariot (204, 604, 704, 721) vers un lieu de stockage (111, 614, 703, 723) de sorte que, sur le lieu de stockage, le chariot contienne le premier dépôt à côté de la première ouverture et le deuxième dépôt à côté de la deuxième ouverture.

2. La remorque, telle que réclamée dans la réclamation 1, se **caractérise par le fait qu'**elle comporte un espace pour un accumulateur (304).

3. La remorque, telle que réclamée dans la réclamation 2, se **caractérise par le fait que** les fermetures (109, 110) sont configurées pour fonctionner sur l'accumulateur.

4. La remorque, telle que réclamée dans la réclamation 1, se **caractérise par le fait qu'**elle comprend un appareil de refroidissement (212) pour refroidir le coffre.

5. La remorque, telle que réclamée dans les réclamations 2 et 4, se **caractérise par le fait que**, grâce à l'accumulateur (304), l'appareil de refroidissement (212) est indépendant du réseau électrique, au moins pendant le transport d'un site de prélèvement à un site de livraison.

6. La remorque telle que réclamée dans la réclamation 1, se **caractérise par le fait qu'**elle comporte en face du paroi un paroi correspondante (210, 610, 715, 724) comprenant des ouvertures vers des dépôts dans le coffre.

7. La remorque, telle que réclamée dans la réclamation 6, se **caractérise par le fait que** la remorque (600) et le chariot (604) ont des dimensions telles que le chariot (604) s'étend de la paroi à la paroi correspondante (610).

8. La remorque telle que réclamée dans la réclamation 1, se **caractérise en ce qu'**elle comprend un dispositif de fixation pour maintenir le chariot sur le lieu de stockage, ledit dispositif de fixation comprenant un guide mécanique (305) et un attelage (306), et le guide est configuré pour toucher les roues du chariot afin de maintenir le chariot contre le mur et l'attelage est configuré pour verrouiller le chariot au plafond de la remorque (302).

9. La remorque telle que réclamée dans la réclamation 1, se **caractérise par le fait que** la fermeture de la remorque (109, 110) est mise en œuvre sous forme de lamelles de porte roulante (908).

10. La remorque, telle que réclamée dans la réclamation 1, se **caractérise par** Je fait que dans la remorque, la fermeture (109, 110) peut être déplacée par un activateur (909) pour couvrir une ouverture (105, 106).

11. La remorque, telle que réclamée dans la réclamation 1, a été conçue de manière à recevoir le chariot (204), dans lequel se trouve le premier dépôt (107), sur une étagère mobile (403) afin d'exposer la bouche d'un fourre-tout et, après une étape de prélèvement, de permettre le déplacement du premier dépôt et du fourre-tout à côté d'une première fermeture (109).

12. La remorque, telle que réclamée dans la réclamation 1, se **caractérise par le fait qu'**elle est configurée pour recevoir le chariot (604) dans lequel le dépôt (107, 108) est incliné pour y conserver son contenu.
